# EUROPEAN PATENT SPECIFICATION

(11) **EP 2 705 950 B1**
(45) Date of publication and mention of the grant of the patent: **19.07.2017**
(21) Application number: 13182792.5
(22) Date of filing: 03.09.2013
(51) Int. Cl.: B32B 5/12, B32B 21/13, B32B 21/14, B32B 7/00, B32B 27/12, B32B 3/14, B32B 3/18, B27D 1/04

(54) **PLYWOOD**
Sperrholz
Contreplaqué

(30) Priority: 07.09.2012 FI 20125929
(43) Date of publication of application: 12.03.2014
(73) Proprietor: UPM Plywood Oy, 15140 Lahti (FI)
(72) Inventor: Kiuru, Jani, 15140 Lahti (FI); Koponen, Simo, 15140 Lahti (FI); Marttila, Pasi, 15140 Lahti (FI)
(74) Representative: Berggren Oy, Tampere

(56) References cited:
- DE-A1- 3 126 934
- DE-U1-202011 108 054
- FR-A1- 2 472 972
- US-A1- 2005 153 150
- Geoffrey Lee ET AL: "Formwork: A practical Approach", , 31 December 1997 (1997-12-31), page 42, XP055241168, ISBN: 978-0-419-22820-2 Retrieved from the Internet: URL:https://books.google.nl/books/about/Fo rmwork.html?id=cAhiPwAACAAJ&redir_esc=y [retrieved on 2016-01-13]

## Description

### FIELD OF THE INVENTION

The present invention relates to flooring for a cargo space of a freight transport vehicle or a freight transport unit of a freight transport vehicle, which flooring is fastened to a chassis of the freight transport vehicle or to a chassis of the freight transport unit of a freight transport vehicle, wherein the flooring comprises at least one plywood board formed of plywood.

Document US 2005/0153150 A1 discloses container flooring based on a layered plate construction. Documents FR 2472972 A1, DE 20 2011 108054 U1, and DE3126934 disclose some layered plate constructions.

### BRIEF DESCRIPTION OF THE INVENTION

The invention is characterized by the features of the independent claim, which relates to a flooring for a cargo space of a freight transport vehicle or a freight transport unit of a freight transport vehicle. The flooring is fastened to a chassis of the freight transport vehicle or to a chassis of the freight transport unit of a freight transport vehicle. The flooring comprises at least one plywood board formed of plywood.
The number of the veneer layers in the plywood is 12 to 44, the plywood having a top veneer layer and a bottom veneer layer and a first principal strength direction and a second principal strength direction, strength of the plywood being higher in the first principal strength direction than in the second principal strength direction; 25 to 38.4% of the veneer layers are laid such that a grain direction of the veneer(s) in the veneer layers is perpendicular to the first principal strength direction of the plywood; the grain direction of the veneer(s) in at least one veneer layer among three topmost veneer layers or among three bottom veneer layers is crosswise to the grain direction of the veneer(s) in at least one other veneer layer among the three topmost or three bottom veneer layers; each veneer layer of the plywood comprises one or more veneers, wherein a veneer is a sheet of wood material rotary-cut off a log; each single veneer has the same strength or stiffness as the other veneers; a top surface of the plywood is coated by phenol resin or polyphenol; the grain direction of the veneer(s) in the top veneer layer and the bottom veneer layer is perpendicular to the first principal strength direction of the plywood; and the grain direction of the veneer(s) in group of veneer layers including two to five veneer layers adjacent to at least one of the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood.

According to an embodiment, in the plywood, the grain direction of the veneer(s) in one veneer layer among at least one of two topmost veneer layers and two bottom veneer layers is crosswise to the grain direction of the veneer(s) in another veneer layer.

According to an embodiment, in the plywood, 15 to 45% of the veneer layers laid between the outer veneer layers having the grain direction perpendicular to the first principal strength direction of the plywood are laid such that the grain direction of the veneer(s) in these veneer layers is perpendicular to the first principal strength direction of the plywood.

According to an embodiment, in the plywood, the number of veneer layers in the plywood is at least one of 15 to 35, 17 to 30 and 19 to 25.

According to an embodiment, in the plywood, the grain direction of the veneer(s) in group of veneer layers including three to four veneer layers adjacent to at least one of the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood.

According to an embodiment, in the plywood, the veneers forming eight, preferably ten, middlemost veneer layers of the plywood are laid such that the grain direction of the veneer(s) in adjacent veneer layers is crosswise relative to each other.

According to an embodiment, in the plywood, the veneers forming eight, preferably ten, middlemost veneer layers of the plywood are laid such that the grain direction of the veneer(s) in adjacent veneer layers is crosswise relative to each other except for one group of veneer layers comprising two adjacent veneer layers wherein the grain direction in both of these veneer layers is the same relative to each other and relative to the first principal strength direction of the plywood.

According to an embodiment, in the plywood, the group of two adjacent veneer layers having the same grain direction is laid at a centre line of the plywood.

According to an embodiment, in the plywood, the grain direction of the veneer(s) in the top veneer layer, the bottom veneer layer and a veneer layer at a centre line of the plywood is perpendicular to the first principal strength direction of the plywood and the group of two adjacent veneer layers having the same grain direction relative to each other is arranged at one side of the veneer layer at the centre line of the plywood next to it.

According to an embodiment, in the plywood, at least one of the top surface of the plywood and the bottom surface of the plywood are coated with phenol resin film.

According to an embodiment, a flooring for a cargo space of a freight transport vehicle or a freight transport unit of a freight transport vehicle, which flooring is fastened to a chassis of the freight transport vehicle or to a chassis of the freight transport unit of a freight transport vehicle, comprises at least one plywood board formed of plywood presented above.

According to an embodiment of a flooring for a cargo space of a freight transport vehicle or a freight transport unit of a freight transport vehicle, the flooring is fastened to a chassis of the freight transport vehicle or to a chassis of the freight transport unit of the freight transport vehicle, wherein the flooring comprises a plywood construction having the features disclosed above for plywood, and optionally also features detailed below.

According to an example of a plywood construction, the plywood construction comprises one plywood board or at least two adjacent plywood boards, the plywood board comprising a number of veneer layers stacked on top of the other and glued together with an adhesive and each veneer layer of the plywood board comprising one or more adjacent veneers, whereby a single veneer layer of the plywood construction consists of veneers belonging to the veneer layers of one or more boards having the same vertical position in the layered structure of the one or more boards and wherein each veneer layer of the plywood construction comprises at least six adjacent veneers, and in which plywood construction a density of at least 90% of the veneers in the middle veneer layers of the plywood construction is more than 0.90 times an average density of the veneers in the middle veneer layers of the plywood construction, or a density of at least 90% of the area of each middle veneer of the plywood construction is at least 1.0 times an average density of the veneers in the middle veneer layers of the plywood construction, or a density of at least 90% of the area of at least one middle veneer layer of the plywood construction is at least 1.02 times an average density of at least one other middle veneer layer of the plywood construction.

According to an example of the plywood construction, at least one middle veneer layer whose density of at least 90% of the area of the veneer layer is at least 1.02 times an average density of at least one other middle veneer layer of the plywood construction is laid to be one of topmost middle veneer layers or one of bottom middle veneer layers of the plywood construction.

According to an example of the plywood construction, at least one middle veneer layer whose density of at least 90% of the area of the veneer layer is at least 1.02 times an average density of at least one other middle veneer layer of the plywood construction is laid to be one of three topmost middle veneer layers or one of three bottom middle veneer layers of the plywood construction.

According to an example of the plywood construction, the veneers in the middle veneer layers of the plywood construction are of same wood species.

According to an example of the plywood construction the plywood board is coated with a phenol resin film.

According to an embodiment of a flooring, the flooring, when it is fastened to the chassis of the freight transport vehicle or to the chassis of the freight transport unit of the freight transport vehicle, comprises at least one zone of the flooring which is more susceptible to a higher stress than at least one other zone of the flooring when the cargo space is loaded or unloaded, and wherein at least part of the zone of the flooring being more susceptible to a higher stress comprises a plywood construction according to any one of examples of the plywood construction presented above.

According to an embodiment of a flooring, at least 30%, preferably at least 50%, and more preferably at least 75%, of the area of the zone of the flooring being more susceptible to a higher stress is implemented by a plywood construction according to any one of examples of the plywood construction presented above.

According to an embodiment of a flooring, the flooring is fastened to the chassis of the freight transport vehicle or to the chassis of the freight transport unit of the freight transport vehicle with an adhesive.

The middle layers of the plywood or the plywood construction refers to all the veneer layers of the plywood or the plywood construction except the two topmost veneer layers and two bottom veneer layers of the plywood or the plywood construction.

The freight transport vehicle herein refers to any freight transport vehicle which may be used for transporting loads or cargoes from one place to another by road and which comprises power generation and transmissions means and moves on wheels such that the freight transport vehicle may move without external devices for power source and transmission. The freight transport vehicle also comprises at least one cargo space for receiving cargo to be transported. The freight transport unit of a freight transport vehicle herein refers to any freight transport unit which comprises a cargo space for receiving cargo to be transported and which may be coupled to a motorized part of the freight transport vehicle either fixedly or detachably.

The freight transport vehicle may thus be a lorry or a trailer lorry used in road transport. When the freight transport vehicle is a lorry, the cargo space of the freight transport vehicle may be an open platform comprising a floor provided with or without walls and constructed fixedly onto the chassis of the lorry, whereby the floor and possible walls define the cargo space of the lorry. The cargo space of the lorry may also be an open platform provided with or without walls and coupled fixedly onto the chassis of the lorry, or an open platform provided with or without walls and coupled detachably onto the chassis of the lorry. The cargo space of the lorry may also be a closed platform provided with walls and a roof and constructed fixedly onto the chassis of the lorry or a closed container coupled fixedly or detachably onto the chassis of the lorry, whereby the floor, walls and roof of the platform or container define the cargo space of the lorry.

When the freight transport vehicle is a trailer lorry comprising a drawing vehicle and at least one trailer, the drawing vehicle forms a drawing unit of the freight transport vehicle and the trailer forms the freight transport unit of the freight transport vehicle. The trailer lorry may be a semitrailer combination truck, a full trailer combination truck or some other kind of a trailer lorry comprising at least one drawing vehicle and at least one trailer. The drawing vehicle may or may not comprise a cargo space. If the drawing vehicle comprises a cargo space, the cargo space may be implemented in any way as explained above in connection with the lorry. The trailer of the lorry may be an open trailer comprising a floor and provided with or without walls or a closed trailer comprising a floor, side and end walls and a roof, whereby the floor and possible walls and roof define the cargo space of the trailer.

When the freight transport means is a lorry or a trailer lorry, the freight transport unit of the freight transport vehicle may also be an open demountable platform comprising a floor and provided with or without walls, which platform may be coupled to a lorry or a trailer by placing it onto the chassis of the lorry or trailer and locked to the lorry or trailer either detachably or fixedly. The freight transport unit of the freight transport vehicle may also be a closed freight container, which may be coupled to a lorry or a trailer by placing it onto the chassis of the lorry or the trailer and locked to the lorry or trailer either detachably or fixedly.

The freight transport means may also be a van, a pickup van or a similar vehicle.

### BRIEF DESCRIPTION OF THE DRAWINGS

In the following, the invention will be described in greater detail by means of preferred embodiments and with reference to the accompanying drawings, in which
Figures 1(a) to 1(f) show schematically different examples of plywood;
Figures 2(a) to 2(l) show schematically further different examples of plywood;
Figure 3 shows schematically a basic principle of a test of a bending resistance of plywood;
Figure 4(a) shows schematically a plywood construction and Figure 4(b) shows schematically a cross-sectional view of the plywood construction of Figure 4(a);
Figure 5(a) shows schematically a second plywood construction and Figure 5(b) shows schematically a cross-sectional view of the plywood construction of Figure 5(a);
Figure 6 shows schematically a third plywood construction;
Figure 7 shows schematically a fourth plywood construction;
Figures 8(a) and 8(b) show schematically a freight transport unit of a freight transport vehicle, and
Figures 9(a) and 9(b) are schematic presentations of floorings suitable for a trailer chassis shown schematically in Figure 9(c).

For the sake of clarity, the figures show the embodiments and examples in a simplified manner. In the figures, like reference numerals identify like elements.

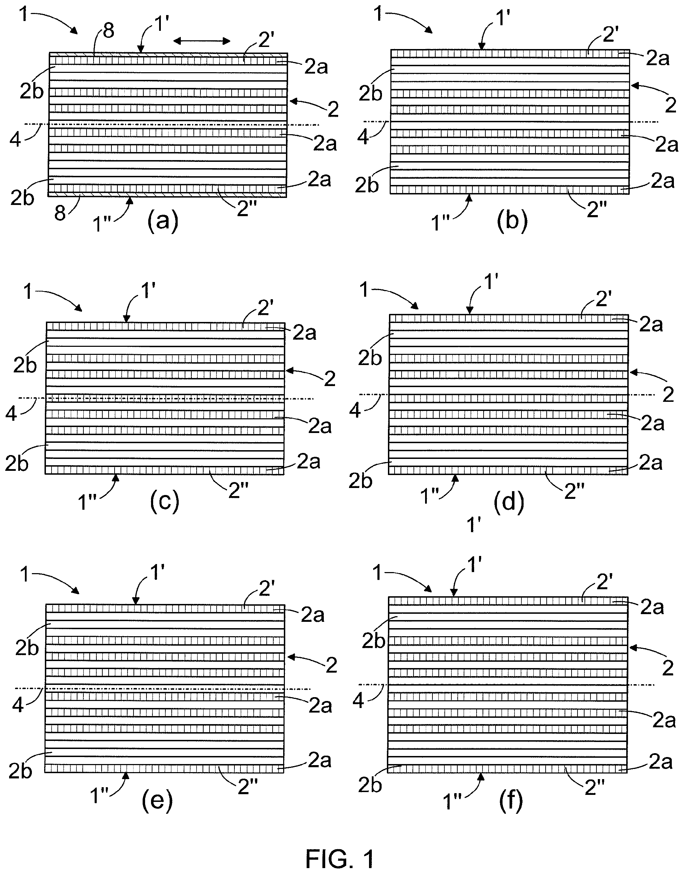

Figures 1(a) 4(b) and 5(b) show plywood for a flooring of the present invention,

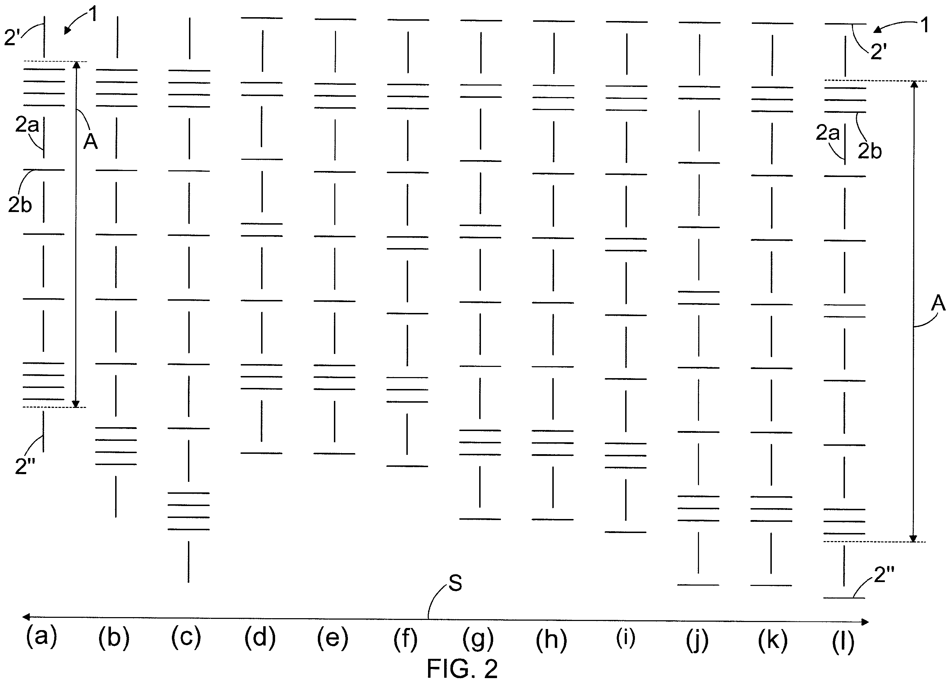

Figures 1(b) to 1(f), 2(a) to 2(c), show, without a phenol resin or polyphenol coating, plywood for a flooring of the present invention, and
Figures 2(d) to 2(l), 3, and 7 show plywood that is not part of the present invention.

### DETAILED DESCRIPTION OF THE INVENTION

Figures 1(a) to 1(f) show schematically six different examples of plywood 1. As for which one of the examples are embodiments of the invention, the reader is referred to the section "BRIEF DESCRIPTION OF THE DRAWINGS". Plywood 1 comprises a number of veneer layers 2 being formed of veneers 3 or plies 3 stacked on top of the other and attached together. The number of veneer layers 2 in the plywood 1 may vary in many ways for example depending on the intended use of the plywood 1. As an example of this the number of veneer layers 2 varies from 17 to 22 in the examples of Figures 1(a) to 1(f). Each veneer layer 2 of plywood 1 may comprise one or more veneers 3. For the sake of clarity, in the examples of Figures 1(a) to 1(f) each veneer layer 2 comprises only one veneer 3. The veneer 3 is a sheet of wood material, which is typically rotary-cut off the log.

The plywood 1 has a top surface 1' provided by a top surface veneer layer 2' or top veneer layer 2' and a bottom surface 1" provided by a bottom surface veneer layer 2" or bottom veneer layer 2". The veneers 3 have been laid in the plywood 1 such that the grain direction in some veneer layers 2 of the plywood 1 is crosswise to the grain direction of the veneers 3 in some other veneer layers 2. In Figures 1(a) to 1(f) the veneer layers 2 having the grains of the veneers being directed or oriented perpendicularly to the plane of the paper have been indicated with reference number 2a and the veneer layers 2 having the grains of the veneers being directed in the direction of the plane of the paper have been indicated with reference number 2b. A centre line of the plywood 1 is indicated with reference number 4.

More examples of the plywood 1 are shown schematically in Figures 2(a) to 2(l), wherein vertical lines denote the veneer layers 2a having the grains of the veneers directed perpendicularly to the plane of the paper and horizontal lines denote the veneer layers 2b having the grains of the veneers directed in the direction of the plane of the paper.

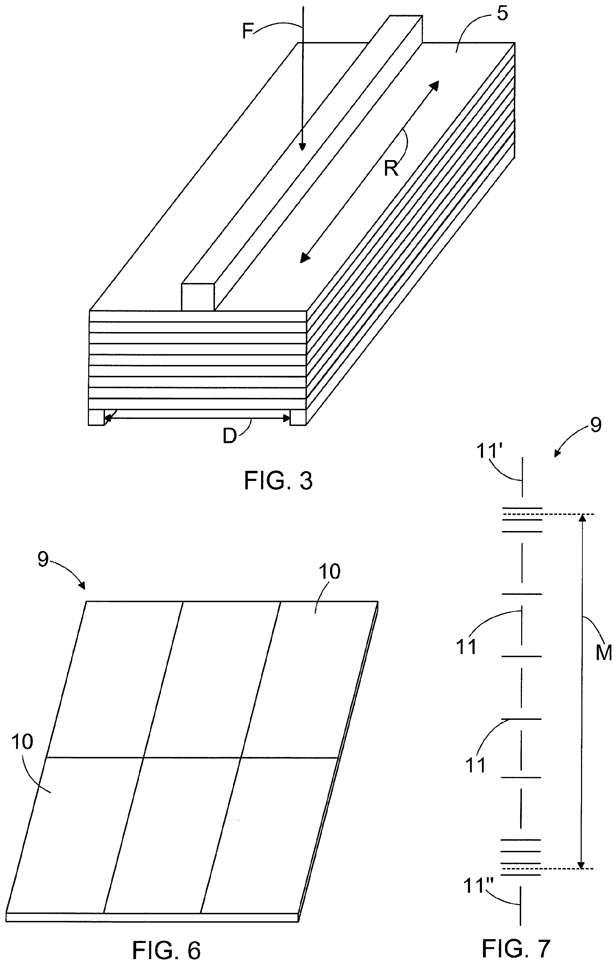

Figure 3 shows schematically a plywood plate 5 cut off plywood 1 and having a number of veneer layers stacked on top of the other. The plywood plate 5 of Figure 3 has a first principal direction and a second principal direction determined by edges of the plywood plate 5 such that the first principal direction of the plywood plate 5 is assumed to coincide with the direction of arrow S and the second principal direction of the plywood plate 5 is assumed to coincide with the direction of arrow R. In anisotropic plates, such as plywood plates, stiffness and strength properties are commonly different in different principal directions of the plate. In case of Figure 3 and in this specification it is determined that the first principal direction S is the first principal strength direction S of the plywood and the second principal direction R is the second principal strength direction R of the plywood and it is assumed that the strength of the plywood plate 5 is higher in the first principal strength direction S than in the second principal strength direction R, whereby the first principal strength direction is determined to be a main strength direction of the plywood 1.

Strength properties of the plywood may be determined for example with a three point bending test as shown in Figure 3. In this test the plywood plate 5 is supported with plurality of supports 6 located at distance D to each other. Load F is applied to the plywood plate 5 through a bar 7, a wheel, a loading plate or other type of contact element or a plurality of contact elements. The principal stress components in the plywood plate 5 caused by the load F and supports 6 are different in S and R directions. In the case of the three point bending test shown in Figure 3 the load F causes bending stresses mainly in S direction and stresses in R direction are minor. It is preferred to construct layered plywood such that it has the first principal strength direction parallel to the direction S, in which direction the bending stresses are higher, and enough strength to resist secondary stresses in the direction of R, whereby a plywood plate, when it is introduced, may be laid such that its first principal strength direction substantially coincides with the main directions of the stresses caused by a load applied to the plywood plate. The test of the bending resistance of the plywood may be carried out for example according to standard SFS-EN 310, which corresponds to standard DIN 52 371.

In the following examples relating to Figures 1(a) to 1(f) and Figures 2(a) to 2(l) the veneer layers 2a having the grains directed perpendicularly to the plane of the paper is assumed to have the grains directed in the direction perpendicular to the first principal strength direction S of the plywood 1. Strength properties of the plywood may be determined for example with a three point bending test as shown in Figure 3. As for which one of the examples are embodiments of the invention, the reader is referred to the section "BRIEF DESCRIPTION OF THE DRAWINGS".

Referring back to Figures 1(a) to 1(f) and Figures 2(a) to 2(l), Figure 1(a) shows schematically plywood 1 having 17 veneer layers 2, in which plywood 1, starting from the top surface 1' of the plywood 1 and including the top surface veneer layer 2' and the bottom surface veneer layer 2", the 1^{st}, 5^{th}, 7^{th}, 10^{th}, 12^{th} and 17^{th} veneer layers have the grain direction perpendicular to the first principal strength direction S of the plywood 1. Thus 35.3% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 26.6% of those veneer layers 2 which are laid between the outermost veneer layers having the grain direction perpendicular to the first principal strength direction S of the plywood 1. In this case only the veneer layers 2 laid between the outermost veneer layers 2 having the grain direction perpendicular to the first principal strength direction S of the plywood 1 are considered. This idea is clarified in Figures 2(a) and 2(l), wherein by arrow A it is indicated those veneer layers 2 which are laid between the outermost veneer layers 2 having the grain direction perpendicular to the first principal strength direction S of the plywood 1.

Figure 1(b) shows schematically plywood 1 having 18 veneer layers 2, in which plywood, starting from the top surface 1' of the plywood 1 and including the top surface veneer layer 2' and the bottom surface veneer layer 2", the 1^{st}, 6^{th}, 8^{th}, 11^{th}, 13^{th}, and 18^{th} veneer layers have the grain direction perpendicular to the first principal strength direction S of the plywood 1. Thus 33.3% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 25% of those veneer layers 2 which are laid between the outermost veneer layers having the grain direction perpendicular to the first principal strength direction S of the plywood 1.

Figure 1(c) shows schematically plywood 1 having 19 veneer layers 2, in which plywood, starting from the top surface 1' of the plywood 1 and including the top surface veneer layer 2' and the bottom surface veneer layer 2", the 1^{st}, 5^{th}, 7^{th}, 10^{th}, 12^{th}, 14^{th}, and 19^{th} veneer layers have the grain direction perpendicular to the first principal strength direction S of the plywood 1. Thus 36.8% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 29.4% of those veneer layers 2 which are laid between the outermost veneer layers having the grain direction perpendicular to the first principal strength direction S of the plywood 1.

Figure 1(d) shows schematically plywood 1 having 20 veneer layers 2, in which plywood, starting from the top surface 1' of the plywood 1 and including the top surface veneer layer 2' and the bottom surface veneer layer ₂", the 1^{st}, 6^{th}, 8^{th}, 11^{th}, 13^{th}, 15^{th}, and 20^{th} veneer layers have the grain direction perpendicular to the first principal strength direction S of the plywood 1. Thus 35.0% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 27.7% of those veneer layers 2 which are laid between the outermost veneer layers having the grain direction perpendicular to the first principal strength direction S of the plywood 1.

Figure 1(e) shows schematically plywood 1 having 21 veneer layers 2, in which plywood, starting from the top surface 1' of the plywood 1 and including the top surface veneer layer 2' and the bottom surface veneer layer 2", the 1^{st}, 5^{th}, 7^{th}, 9^{th}, 12^{th}, 14^{th}, 16^{th}, and 21^{st} veneer layers have the grain direction perpendicular to the first principal strength direction S of the plywood 1. Thus 38.1% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 31.5% of those veneer layers 2 which are laid between the outermost veneer layers having the grain direction perpendicular to the first principal strength direction S of the plywood 1.

Figure 1(f) shows schematically plywood 1 having 22 veneer layers 2, in which plywood, starting from the top surface 1' of the plywood 1 and including the top surface veneer layer 2' and the bottom surface veneer layer ₂", the 1^{st}, 6^{th}, 8^{th}, 10^{th}, 13^{th}, 15^{th}, 17^{th}, and 22^{nd} veneer layers have the grain direction perpendicular to the first principal strength direction S of the plywood 1. Thus 36.4% of the veneer layers 2 are directed such that the grain direction in these veneer layers is perpendicular to the first principal strength direction S of the plywood 1. The portion of the veneer layers 2, which are laid such that their grain direction is perpendicular to the first principal strength direction S of the plywood 1, is 30% of those veneer layers 2 which are laid between the outermost veneer layers having the grain direction perpendicular to the first principal strength direction S of the plywood 1.

In the examples of Figures 2(a) to 2(l) between 33.3 and 38.4% of the veneer layers 2 are directed such that the grain direction in these veneer layers is perpendicular to the first principal strength direction S of the plywood 1. Furthermore, in the examples of Figures 2(a) to 2(l) the portion of the veneer layers 2, which are laid such that their grain direction is perpendicular to the first principal strength direction S of the plywood 1, varies between 26.7 and 35.2%

When a preselected portion of the veneer layers in the plywood are laid such that the grain direction of the veneers in the veneer layers is arranged to be perpendicular to the first principal strength direction S of the plywood 1, an increased strength or rigidity, i.e. bending stiffness, of the plywood may be achieved when each single veneer has about the same strength or stiffness as the other veneers. The portion of veneer layers laid like this may vary between 25.0 and 38.4%, preferably between 30.0 and 38.2%.

The effect of increased strength or rigidity of the plywood may also be affected by having a preselected portion of the veneer layers in the middle portion of the plywood, when considering the thickness direction of the plywood, to be arranged such that the grain orientation in these veneer layers is perpendicular to the first principal strength direction S of the plywood 1. In this case the veneer layers laid between the outermost veneer layers having the grain direction perpendicular to the first principal strength direction S of the plywood 1 is considered. The portion of veneer layers arranged like this may vary between 15 and 45%, preferably between 20 and 40%, and more preferably between 24 and 36 %. Alternatively, over 15%, or preferably over 20%, or more preferably over 24% and less than 45%, or preferably less than 40%, or more preferably less than 36 % of the veneer layers, in the middle portion of the plywood as explained above, i.e. between the outermost veneer layers having the grain direction perpendicular to the first principal strength direction S of the plywood 1 is laid such that their grain orientation is arranged to be perpendicular to the first principal strength direction S of the plywood 1.

On the strength or rigidity of the plywood may further be affected by a mutual grain direction of the veneers in the veneer layers forming the top and bottom veneer layers of the plywood and the veneer layers being laid close to the top and bottom veneer layers. According to a further example the grain direction of the veneer(s) in at least one veneer layer among three topmost veneer layers or three bottom veneer layers is crosswise to the grain direction of the veneer(s) in at least one other veneer layers among the three topmost or three bottom veneer layers.

The grain direction of the veneer(s) in at least one veneer layer among three topmost veneer layers and among three bottom veneer layers is crosswise to the grain direction of the veneer(s) in at least one other veneer layer.

According to another example, the grain direction of the veneer(s) in one veneer layer among at least one of two topmost veneer and two bottom veneer layers is crosswise to the grain direction of the veneer(s) in another veneer layer. In other words, the grain direction of the veneer(s) in one veneer layer among two topmost veneer layers or the grain direction of the veneer(s) in one veneer layer among two bottom veneer layers is crosswise to the grain direction of the veneer(s) in another veneer layer among two topmost veneer layers or two bottom veneer layers, or the grain direction of the veneer(s) in one veneer layer among two topmost veneer layers and the grain direction of the veneer(s) in one veneer layer among two bottom veneer layers is crosswise to the grain direction of the veneer(s) in another veneer layer among two topmost veneer layers and two bottom veneer layers.

The number of veneer layers in the plywood is 12 to 44, or preferably 15 to 35, more preferably 17 to 30 or 19 to 25. Alternatively, the number of veneer layers in the plywood is at least 12, preferably 15 or more preferably at least 17 or 19, and less than 40, preferably 35, or more preferably less than 30, 25 or 22.

The grain direction of the veneer(s) in group of veneer layers including two to five, preferably three to four, veneer layers adjacent to at least one of the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood. In other words, in this example of the plywood the grain direction of the veneer(s) in group of veneer layers including two to five, preferably three to four, veneer layers adjacent to the topmost veneer layer having the grain direction perpendicular to the first principal strength direction of the plywood or the bottom veneer layer having the grain direction perpendicular to the first principal strength direction of the plywood is crosswise to the grain direction of the topmost veneer layer or the bottom veneer layer having the grain direction perpendicular to the first principal strength direction of the plywood, or the grain direction of the veneer(s) in group of veneer layers including two to five, preferably three to four, veneer layers adjacent to the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood.

According to another example, the veneers forming eight, preferably ten, middlemost veneer layers of the plywood are laid such that the grain direction of the veneer(s) in adjacent veneer layers is crosswise relative to each other. An example of this kind of plywood is shown in Figure 2(c), for example.

According to an example, the veneers forming eight, preferably ten, middlemost veneer layers of the plywood are laid such that the grain direction of the veneer(s) in adjacent veneer layers is crosswise relative to each other except for one group of veneer layers comprising two adjacent veneer layers wherein the grain direction in both of these veneer layers is the same relative to each other and relative to the first principal strength direction of the plywood. An example of this kind of plywood is shown in Figure 1 (c), for example.

According to an example, the group of two adjacent veneer layers having the same grain direction is laid at a centre line of the plywood. An example of this kind of plywood is shown in Figure 1 (f), for example.

According to an example, the grain direction of the veneer(s) in the top veneer layer, the bottom veneer layer and a veneer layer at a centre line of the plywood is perpendicular to the first principal strength direction of the plywood and the group of two adjacent veneer layers having the same grain direction relative to each other is arranged at one side of the veneer layer at the centre line of the plywood next to it. An example of this kind of plywood is shown in Figure 1 (c), for example.

The plywood 1 as presented above, may be manufactured by laying veneers 3 on top of the other for forming veneer layers 2, applying an adhesive between the veneers 3 when the veneers 3 are laid on top of the other, and hot-pressing the veneer layers 2 together. When the veneers are laid on top of the other, 25 to 38.4% of the veneer layers 2 are formed such that the veneers in these veneer layers are laid such that their grain orientation is perpendicular to the first principal strength direction S of the plywood 1. The adhesive may for example be phenol resin. The adhesive may be applied between the veneers 2 either in liquid form or as impregnated into a carrier sheet, such as a paper sheet.

According to an example, at the same time in the manufacturing of the plywood the veneers are laid such that the grain direction of the veneer(s) in at least one veneer layer among three topmost veneer layers or among three bottom veneer layers is crosswise to a grain direction of the veneer(s) in at least one other veneer layer among the three topmost or three bottom veneer layers.

According to an example, at least one of the top surface 1' of the plywood 1 and the bottom surface 1" of the plywood 1 is coated by a coating material. The coating material may be applied to the top 1' and bottom 1" surfaces of the plywood 1 before pressing the veneers layers 2 together. The coating material may for example be phenol resin or polyphenol. A layer 8 of coating material is shown schematically in Figure 1(a) at the outer surfaces of the top surface veneer layer 2' and the bottom surface veneer layer 2". The increased strength or rigidity of the plywood 1 provides improved coatability of the plywood.

According to an example the plywood 1 is coated with a phenol resin film. The increased strength or rigidity of the plywood 1 reduces deformation of the surfaces 1', 1" of the plywood 1 such that a hard film-like coating does not crack in the surfaces 1', 1" of the plywood 1.

At least one of the top surface 1' and the bottom surface 1" of the plywood 1 may also comprise a surface profiling for increasing friction of the surface of the plywood 1.

The thickness of the veneers 3 and thereby the thickness of the veneer layers 2 in the plywood 1 may vary. Typical thicknesses of the veneers 3 may vary between 1.5 and 4 mm. Each of the veneers 2 in the plywood 1 may have about the same thickness.

The wood or wood species used for manufacturing the veneers 3 may also vary. For the manufacture of veneers 3 of the disclosed plywood 1, deciduous trees may be used, for example birch, beech, aspen and maple. The wood of deciduous trees is harder than the wood of conifer trees, whereby the plywood 1 manufactured from veneers made of deciduous tree, especially from birch or beech, is more durable than plywood made of conifer trees.

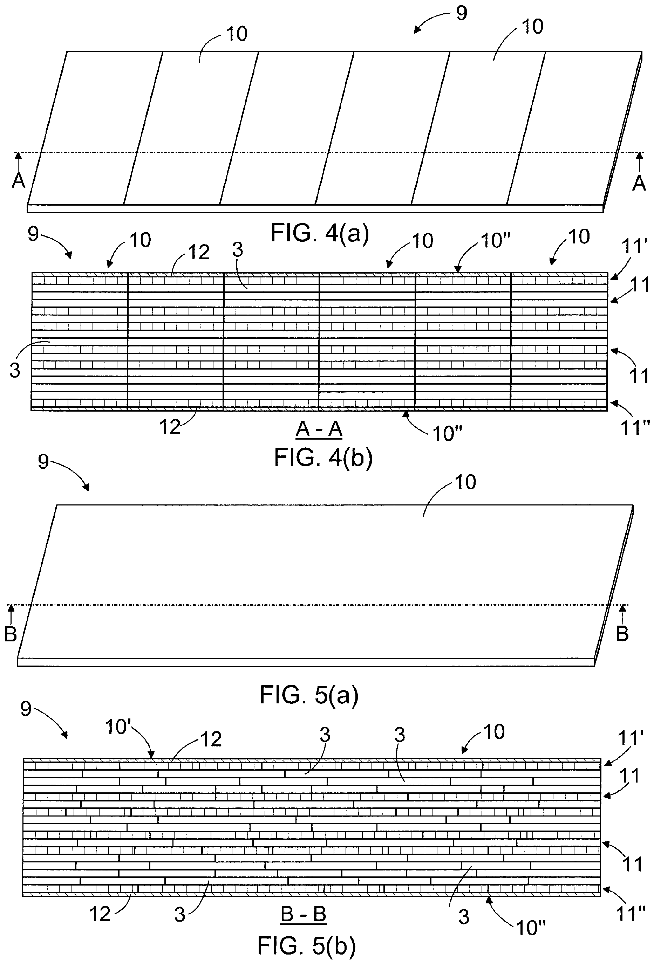

Figure 4(a) shows schematically a plywood construction 9 and Figure 4(b) shows schematically a cross-sectional view of the plywood construction 9 of Figure 4(a). The plywood construction 9 of Figures 4(a) and 4(b) comprises six plywood boards 10 laid adjacent to each other. Plywood boards 10 comprise a number of veneer layers stacked on top of the other and glued together with an adhesive. In the plywood boards 10 each of the veneer layers are formed of only one veneer 3 but the veneer layers of the plywood boards 10 could comprise more than one veneer too. In Figure 4(a) and 4(b) the veneer layers of the plywood boards 10 being in the same vertical position in the thickness direction of the plywood boards 10 form veneer layers of the plywood construction 9. The veneer layers of the whole plywood construction 9 are denoted with reference number 11 in Figure 4(b). Each veneer layer 11 of the plywood construction 9 of Figures 4(a) and 4(b) thus comprise six veneers 3.

Figure 5(a) shows schematically a second plywood construction 9 and Figure 5(b) shows schematically a cross-sectional view of the plywood construction 9 of Figure 5(a). As for which one of the examples are embodiments of the invention, the reader is referred to the section "BRIEF DESCRIPTION OF THE DRAWINGS". The plywood construction 9 of Figures 5(a) and 5(b) comprises only one plywood board 10. The plywood board 10 comprises a number of veneer layers, each veneer layer of the plywood board 10 comprising at least six adjacent veneers 3 having a varying size as shown in Figure 5(b). The veneers 3 in the same vertical position in the thickness direction of the plywood board 10 of Figures 5(a) and 5(b) form veneer layers 11 of the plywood construction 9 of Figures 5(a) and 5(b).

Figure 6 shows schematically a third plywood construction 9. The plywood construction 9 of Figure 6 comprises six plywood boards 10 laid adjacent to each other such that there are two rows of three plywood boards 10. In the plywood construction 9 of Figure 6 the veneer layers being in the same vertical position in the thickness direction of the plywood boards 10 form veneer layers 11 of the plywood construction 9. Thus, in the plywood construction of Figure 6 each veneer layer 11 of the plywood construction comprises six veneers which are adjacent to each other.

The middle layers of the plywood construction 9 or the middle veneer layers of the plywood construction 9 comprises all the veneer layers 11 of the plywood construction 9 except two topmost veneer layers and two bottom veneer layers 11. Figure 7 discloses schematically a plywood construction 9, wherein vertical lines denotes veneer layers 11 having a certain grain direction and horizontal lines denotes veneer layers 11 having a grain direction which is crosswise to the grain direction of the veneer layers denoted by the vertical lines. In Figure 7 the vertical lines may denote veneer layers having the grains of the veneers directed perpendicularly to the plane of the paper and horizontal lines may thus denote veneer layers having the grains of the veneers directed in the direction of the plane of the paper. The middle layers of the plywood construction 9 are denoted by arrow M in Figure 7.

The density of the veneer refers to the density of the veneer measured from completed plywood. The density of the veneer of the completed plywood may be measured from the completed plywood for example in such a way that a piece of a plywood board is cut off from the plywood under interest. After that the wood material of veneers are removed from the piece of the plywood board one veneer at a time. For example grounding or sanding may be used for that. When the weight of the piece of the plywood board is measured both before and after grinding a specific veneer off the plywood board, the weight difference of the plywood board before and after grinding, taking also into account the change in the volume of the plywood board, describes the density of the specific veneer. When this procedure is repeated for every veneer in the board, the density of each of the veneers in the plywood may be determined. The density of the plywood board may also be determined with methods based on radiation, such as by roentgen.

According to an example the veneers in the middle layers of the plywood construction are of same wood species.

According to an example the plywood board 10 forming at least part of the plywood construction is a coated plywood board. A layer 12 of coating material is shown schematically in Figures 4(b) and 5(b). The coating of the plywood board may be a phenol resin film. The film-like coating may be applied to the surface of the plywood construction due to its improved strength or rigidity.

At least one of the top surface 10' and the bottom surface 10" of the plywood board 10 may also comprise a surface profiling for increasing friction of the surface of the plywood 10.

The thickness of the veneers 3 and thereby the thickness of the veneer layers 11 in the plywood construction may vary. Typical thicknesses of the veneers 2 may vary between 1.5 and 4 mm. Each of the veneers 3 in the plywood construction 9 may have about the same thickness.

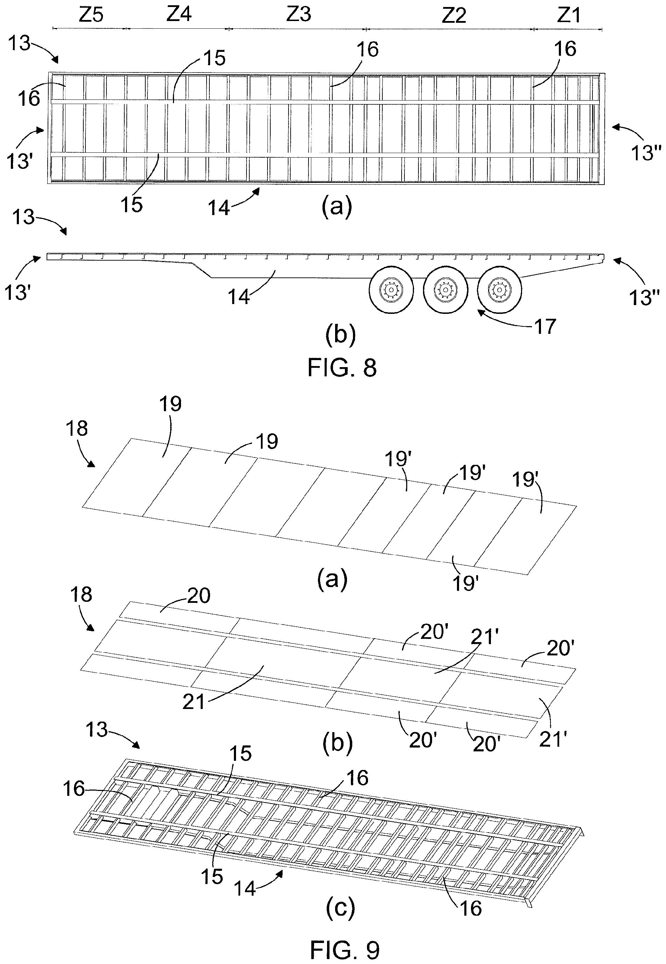

Figures 8(a) and 8(b) show schematically a freight transport unit of a freight transport vehicle, the freight transport unit being a trailer 13 which may be connected to a drawing vehicle such as a lorry (not shown) with coupling means (not shown) at a front end 13', whereby the trailer 13 together with the lorry provides a freight transport vehicle. Figure 8(a) shows a schematic top view of the trailer 13 and Figure 8(b) shows a schematic side view of the trailer 13.

The trailer 13 comprises a chassis 14 comprising longitudinal beams 15 and transversal beams 16 attached together and a bogie unit 17 attached to the chassis 14 near a back end 13" of the trailer. When a flooring is formed on the chassis 14 of the trailer 13 as shown schematically below in Figures 9(a) to 9(c), the chassis 14 together with the flooring provide a floor of the trailer 13, the floor defining a cargo space of the trailer 13 of Figures 8(a) and 8(b). The trailer 13 could also be provided with walls and a ceiling whereby the floor, the walls and the ceiling of the trailer together define the cargo space of the trailer. However, for the sake of clarity, the walls and the ceiling are not shown in the Figures.

Typically, the trailer 13 or a similar freight transport unit of a freight transport vehicle is loaded and unloaded with a fork-lift truck, which is driven on and off the trailer 13 at the back end 13" of the trailer 13. A typical axle load of fork-lift truck used for this purpose is one to four tons. When considering stresses caused by the fork-lift truck on the flooring of the trailer 13 during loading and unloading of the trailer and stresses caused by the load during transportation, the trailer 13 and the flooring to be fastened to the trailer or another freight transport unit of a freight transport vehicle may be divided into a number of zones where stresses may be different. To clarify this, Figures 8(a) and 8(b) show allocation of the trailer 13 into five zones, i.e. zones Z1, Z2, Z3, Z4, and Z5, the allocation of the trailer 13 into different zones naturally at the same time corresponding to the allocation of the flooring fastened to the trailer 13 into corresponding zones.

The first zone Z1 is situated at the back end 13" of the trailer 13. The highest stress caused by the fork-lift truck to the flooring of the trailer 13 takes place at this zone Z1. The number of stress occasions is the highest one because every time the fork-lift truck is driven on and off the trailer some stress is caused to the trailer 13. Also the speed of the fork-lift truck is the highest one at this zone of the trailer 13. Extra stress is also caused in the form of dynamic stress when the fork-lift truck moves from a dock on the trailer. The amount of this extra stress is typically 30 to 100% of the static wheel load of the fork-lift truck.

The bogie unit 17 resides at zone Z2 of the trailer. Owing to the space needed for the wheels, the distance between two parallel transversal frame beams 16 is typically clearly longer, e.g. 400 to 600 mm, than a typical distance, e.g. 300 to 500 mm, between the transversal frame beams 16. At this zone Z2, the flooring experiences higher stresses owing to the longer distance between the transversal frame bars than at zones where the distance between the transversal frame bars is shorter. At zone Z2, the speed of the fork-lift truck is often 5 to 15 km/h, which causes swaying of the load and thereby extra dynamic stress in addition to the static wheel load.

At the third zone Z3, the number of runs and the speed of the fork-lift truck are lower than at the zones Z1 and Z2. Also the distance between the transversal frame bars 16 is typically shorter at the zone Z3 than at the zone Z2. Therefore the stresses experienced by the flooring are smaller at the zone Z3 than at the zones Z1 and Z2.

At the fourth zone Z4, the number of runs and the speed of the fork-lift truck are low and the extra dynamic stresses caused by the wheel load of the fork-lift truck to the flooring are quite low.

At the fifth zone Z5, the flooring experiences no stress caused by the wheel load of the fork-lift truck, because when the cargo to be loaded to the zone Z5 is transferred to this zone, it is supported by the forks of the fork-lift truck and the flooring experiences the stress caused by a weight of the cargo only.

The flooring 18 of the trailer 13 may be implemented by plywood boards 19, 20, 21 attached to the beams 15, 16 of the chassis 14 of the trailer 13. Figure 9(c) shows schematically the chassis 14 of the trailer 13 shown in Figures 8(a) and 8(b), and Figures 9(a) and 9(b) show schematically two different possible plywood board layouts for providing the flooring 18 of the trailer 13 before the plywood boards 12 are fastened to the trailer 13. The plywood boards 19, 20, 21 may be fastened to the chassis 14 of the trailer 13 for example by screws or an adhesive, such as polyurethane. The plywood boards 19, 20 and 21 used in the flooring 18 also comprise a surface coating for increasing wear and moisture resistance of the boards.

The flooring 18 shown in Figure 9(a) comprises a total of eight plywood boards 19, each plywood board extending as one uniform piece over the width direction of the trailer 13. In this direction, each plywood board 13 has the same dimension. In the longitudinal direction of the trailer 13, the dimension of the plywood boards 19 may vary.

The flooring 18 shown in Figure 9(b) comprises eight plywood boards 20 intended to be located on opposite sides of the trailer 13 in the width direction of the trailer 13, and four plywood boards 21 intended to be located in a central portion of the trailer 13 in the width direction of the trailer 13. When considering the plywood boards 20, the dimension of these plywood boards 20 is about the same in the width direction of the trailer 13, but the dimensions of the plywood boards in the longitudinal direction of the trailer 13 may vary. This also applies to the plywood boards 21.

The flooring 18 comprising plywood boards 19 in Figure 9(a) and the flooring 18 comprising plywood boards 20 and 21 in Figure 9(b) may be implemented as a plywood construction 9 as disclosed above. In case of Figure 9(a) the plywood construction would then comprise eight plywood boards laid adjacent to each other and each veneer layer of the plywood construction would comprise at least eight veneers. In case of Figure 9(b) the plywood construction could then comprise even twelve plywood boards laid adjacent to each other and each veneer layer of the plywood construction would then comprise at least twelve veneers. The plywood boards 19 forming the flooring 18 in Figure 9(a) and the plywood boards 20 and 21 forming the flooring 18 in Figure 9(b) may also be manufactured from the plywood 1 as disclosed in Figures 1(a) to 1(f) and Figures 2(a) to 2(l). In this case the plywood 1 may comprise veneers having a density as explained in connection with Figures 4(a), 4(b), 5(a), 5(b), 6 and 7. The flooring 18 may thus in all these cases be manufactured from plywood having an increased strength or rigidity. This kind of plywood flooring may be used at every zone Z1 to Z5 of the flooring 18. Because this kind of plywood flooring has an increased strength or rigidity when compared with floorings manufactured from conventional plywood, it may be possible to alter the construction of the chassis 14 of the trailer 13 such that the strength of the parts of the chassis 14 is smaller than previously and such that the required strength of the trailer 13 is obtained by the combined effect of the chassis 14 and the flooring 18. This may reduce the weight of the trailer and thereby the fuel consumption of the freight transport vehicle. Alternatively, the payload of the freight transport means may be increased.

Plywood flooring having an increased strength or rigidity obtained as disclosed above, may also be used only in some restricted areas of the flooring 18, such as at the zones Z1 and Z2 of this example, at which zones stresses experienced by the flooring 18 are higher than at the other zones. The plywood boards which are intended to provide the flooring at the first two zones Z1 and Z2 and at least which plywood boards thus have the increased strength or rigidity, are denoted by reference numbers 19', 20', and 21' in Figures 9(a) and 9(b). The use of this kind of plywood boards at the zones Z1 and Z2 increases the lifetime of the flooring 18. This kind of plywood boards may be used in the whole area of the zones Z1 and Z2 or only in a portion of the areas of the zones Z1 and Z2. Therefore, this kind of plywood boards may be used at the zones Z1 and Z2 for example such that at least 30% or at least 50 % or at least 75% of the areas of the zones Z1 and Z2 of the flooring are provided with one or more plywood boards having an increased strength or rigidity. Therefore, in the embodiment of Figure 9(b), for example, it is possible that only the plywood boards 20' in the side parts of the trailer 13 flooring 18 or only the plywood boards 21' in the middle part of the trailer at zones Z1 and Z2 are made from the plywood material having an increased strength or rigidity. It should, however, be noted that the dimensions of the boards do not necessarily have to correspond to the dimensions of the zones Z1 to Z5, i.e. the edges of the boards do not need to coincide with the virtual edges of the zones Z1 to Z5.

It will be obvious to a person skilled in the art that, as the technology advances, the inventive concept can be implemented in various ways. The invention and its embodiments are not limited to the examples described above but may vary within the scope of the claims. It should be noted that Figures disclose only some examples of the novel type of plywood or plywood construction and therefore the actual plywood or plywood construction may vary from those presented in Figures.

## Claims

1. A flooring (18) for a cargo space of a freight transport vehicle or a freight transport unit of a freight transport vehicle, which flooring (18) is fastened to a chassis (14) of the freight transport vehicle or to a chassis (14) of the freight transport unit of a freight transport vehicle, wherein the flooring (18) comprises at least one plywood board (10, 19, 20, 21, 19', 20', 21') formed of plywood comprising a number of veneer layers stacked on top of the other and glued together with an adhesive, veneer layer being formed of veneer(s) in the same vertical position in the thickness direction of the plywood,
the number of the veneer layers in the plywood being 12 to 44, the plywood having a top veneer layer and a bottom veneer layer and a first principal strength direction and a second principal strength direction, strength of the plywood being higher in the first principal strength direction than in the second principal strength direction, and in which plywood
25 to 38.4% of the veneer layers are laid such that a grain direction of the veneer(s) in the veneer layers is perpendicular to the first principal strength direction of the plywood and
the grain direction of the veneer(s) in at least one veneer layer among three topmost veneer layers or among three bottom veneer layers is crosswise to the grain direction of the veneer(s) in at least one other veneer layer among the three topmost or three bottom veneer layers **characterized in that**
each veneer layer of the plywood comprises one or more veneers (3), wherein a veneer (3) is a sheet of wood material rotary-cut off a log,
each single veneer (3) has the same strength or stiffness as the other veneers,
a top surface of the plywood is coated by phenol resin or polyphenol,
the grain direction of the veneer(s) in the top veneer layer and the bottom veneer layer is perpendicular to the first principal strength direction of the plywood, and
the grain direction of the veneer(s) in group of veneer layers including two to five veneer layers adjacent to at least one of the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood.

2. The flooring (18) of claim 1, wherein
a bottom surface of the plywood is coated by phenol resin or polyphenol.

3. Flooring (18) according to claim 1 or 2, wherein the plywood is coated with phenol resin film.

4. Flooring (18) according to any one of the preceding claims, wherein
the plywood has been manufactured from veneers (3) made of deciduous tree, such as from birch or beech.

5. Flooring (18) according to any one of the preceding claims, wherein
the grain direction of the veneer(s) in one veneer layer among two topmost veneer layers is crosswise to the grain direction of the veneer(s) in another veneer layer among two topmost veneer layers.

6. Flooring (18) according to claim 5
the grain direction of the veneer(s) in one veneer layer among two topmost veneer layers and the grain direction of the veneer(s) in one veneer layer among two bottom veneer layers is crosswise to the grain direction of the veneer(s) in another veneer layer among two topmost veneer layers and two bottom veneer layers.

7. Flooring (18) according to any of the preceding claims, wherein the number of veneer layers in the plywood is at least one of 15 to 35, 17 to 30 and 19 to 25.

8. Flooring (18) according to any one of the preceding claims, wherein the grain direction of the veneer(s) in group of veneer layers including three to four veneer layers adjacent to at least one of the topmost veneer layer having the grain direction perpendicular to the first principal strength direction of the plywood and the bottom veneer layer having the grain direction perpendicular to the first principal strength direction of the plywood is crosswise to the grain direction of the topmost veneer layer and the bottom veneer layer having the grain direction perpendicular to the first principal strength direction of the plywood.

9. Flooring (18) according to any one of the preceding claims, wherein the veneers forming eight, preferably ten, middlemost veneer layers of the plywood are laid such that the grain direction of the veneer(s) in adjacent veneer layers is crosswise relative to each other.

10. Flooring (18) according to any one of claims 1 to 8, wherein the veneers forming eight, preferably ten, middlemost veneer layers of the plywood are laid such that the grain direction of the veneer(s) in adjacent veneer layers is crosswise relative to each other except for one group of veneer layers comprising two adjacent veneer layers wherein the grain direction in both of these veneer layers is the same relative to each other and relative to the first principal strength direction of the plywood.

11. Flooring (18) according to claim 10, wherein the group of two adjacent veneer layers is laid at a centre line of the plywood.

12. Flooring (18) according to claim 10, wherein the grain direction of the veneer(s) in the top veneer layer, the bottom veneer layer and a veneer layer at a centre line of the plywood is perpendicular to the first principal strength direction of the plywood and wherein the group of two adjacent veneer layers having the same grain direction relative to each other is arranged at one side of the veneer layer at the centre line of the plywood next to it.

## Patentansprüche

1. Bodenbelag (18) für einen Laderaum eines Gütertransportfahrzeugs oder einer Gütertransporteinheit eines Gütertransportfahrzeugs, wobei der Bodenbelag (18) an einem Fahrgestell (14) des Gütertransportfahrzeugs oder an einem Fahrgestell (14) der Gütertransporteinheit eines Gütertransportfahrzeugs befestigt ist, wobei der Bodenbelag (18) mindestens eine Sperrholzplatte (10, 19, 20, 21, 19', 20', 21') umfasst, die aus einem Sperrholz ausgebildet ist, das eine Anzahl von Furnierlagen umfasst, die oben auf der anderen gestapelt und mit einem Leim zusammengeleimt sind, wobei die Furnierlage aus einem Furnier bzw. Furnieren in der gleichen vertikalen Position in der Dickenrichtung des Sperrholzes ausgebildet ist,
wobei die Anzahl der Furnierlagen im Sperrholz 12 bis 44 beträgt, wobei das Sperrholz eine obere Furnierlage und eine untere Furnierlage sowie eine erste Hauptfestigkeitsrichtung und eine zweite Hauptfestigkeitsrichtung aufweist, wobei die Festigkeit des Sperrholzes in der ersten Hauptfestigkeitsrichtung höher als in der zweiten Hauptfestigkeitsrichtung ist und wobei in dem Sperrholz
25 bis 38,4 % der Furnierlagen derart verlegt sind, dass eine Faserrichtung des bzw. der Furniere in den Furnierlagen rechtwinklig zur ersten Hauptfestigkeitsrichtung des Sperrholzes verläuft und
die Faserrichtung des bzw. der Furniere in mindestens einer Furnierlage unter drei obersten Furnierlagen oder unter drei unteren Furnierlagen quer zur Faserrichtung des bzw. der Furniere in mindestens einer anderen Furnierlage unter den drei obersten oder drei unteren Furnierlagen verläuft,
**dadurch gekennzeichnet, dass**
jede Furnierlage des Sperrholzes ein oder mehrere Furniere (3) umfasst, wobei ein Furnier (3) ein Blatt aus einem durch Rundschälen von einem Baumstamm abgetrenntes Holzmaterial ist,
jedes einzelne Furnier (3) die gleiche Festigkeit oder Steifigkeit wie die anderen Furniere aufweist,
eine obere Oberfläche des Sperrholzes mit Phenolharz oder Polyphenol beschichtet ist,
die Faserrichtung des bzw. der Furniere in der oberen Furnierlage und der unteren Furnierlage rechtwinklig zur ersten Hauptfestigkeitsrichtung des Sperrholzes verläuft und
die Faserrichtung des bzw. der Furniere in einer Gruppe von Furnierlagen, die zwei bis fünf Furnierlagen angrenzend an mindestens eine der obersten Furnierlagen mit der rechtwinklig zur ersten Hauptfestigkeitsrichtung des Sperrholzes verlaufenden Faserrichtung und die untere Furnierlage mit der rechtwinklig zur ersten Hauptfestigkeitsrichtung des Sperrholzes verlaufenden Faserrichtung umfasst, quer zur Faserrichtung der obersten Furnierlage und der unteren Furnierlage mit der rechtwinklig zur ersten Hauptfestigkeitsrichtung des Sperrholzes verlaufenden Faserrichtung verläuft.

2. Bodenbelag (18) nach Anspruch 1, wobei eine untere Oberfläche des Sperrholzes mit Phenolharz oder Polyphenol beschichtet ist.

3. Bodenbelag (18) nach Anspruch 1 oder 2, wobei das Sperrholz mit Phenolharzfilm beschichtet ist.

4. Bodenbelag (18) nach irgendeinem der vorangehenden Ansprüche, wobei das Sperrholz aus Furnieren (3) gefertigt wurde, die aus einem Laubbaum wie beispielsweise aus Birke oder Buche bestehen.

5. Bodenbelag (18) nach irgendeinem der vorangehenden Ansprüche, wobei die Faserrichtung des bzw. der Furniere in einer Furnierlage unter zwei obersten Furnierlagen quer zur Faserrichtung des bzw. der Furniere in einer anderen Furnierlage unter zwei obersten Furnierlagen verläuft.

6. Bodenbelag (18) nach Anspruch 5, wobei die Faserrichtung des bzw. der Furniere in einer Furnierlage unter zwei obersten Furnierlagen und die Faserrichtung des bzw. der Furniere in einer Furnierlage unter zwei unteren Furnierlagen quer zur Faserrichtung des bzw. der Furniere in einer anderen Furnierlage unter zwei obersten Furnierlagen und zwei unteren Furnierlagen verlaufen.

7. Bodenbelag (18) nach irgendeinem der vorangehenden Ansprüche, wobei die Anzahl von Furnierlagen im Sperrholz mindestens eine von 15 bis 35, 17 bis 30 und 19 bis 25 ist.

8. Bodenbelag (18) nach irgendeinem der vorangehenden Ansprüche, wobei die Faserrichtung des bzw. der Furniere in einer Gruppe von Furnierlagen, die drei bis vier Furnierlagen angrenzend an mindestens eine der obersten Furnierlagen mit der rechtwinklig zur ersten Hauptfestigkeitsrichtung des Sperrholzes verlaufenden Faserrichtung und die untere Furnierlage mit der rechtwinklig zur ersten Hauptfestigkeitsrichtung des Sperrholzes verlaufenden Faserrichtung umfasst, quer zur Faserrichtung der obersten Furnierlage und der unteren Furnierlage mit der rechtwinklig zur ersten Hauptfestigkeitsrichtung des Sperrholzes verlaufenden Faserrichtung verläuft.

9. Bodenbelag (18) nach irgendeinem der vorangehenden Ansprüche, wobei die Furniere, die acht, vorzugsweise zehn mittelste Furnierlagen des Sperrholzes bilden, derart verlegt sind, dass die Faserrichtung des bzw. der Furniere in benachbarten Furnierlagen quer relativ zueinander verläuft.

10. Bodenbelag (18) nach irgendeinem der Ansprüche 1 bis 8, wobei die Furniere, die acht, vorzugsweise zehn mittelste Furnierlagen des Sperrholzes bilden, derart verlegt sind, dass die Faserrichtung des bzw. der Furniere in benachbarten Furnierlagen quer relativ zueinander verläuft außer bei einer Gruppe von Furnierlagen, die zwei benachbarte Furnierlagen umfasst, wobei die Faserrichtung in beiden dieser Furnierlagen die gleiche relativ zueinander und relativ zur ersten Hauptfestigkeitsrichtung des Sperrholzes ist.

11. Bodenbelag (18) nach Anspruch 10, wobei die Gruppe von zwei benachbarten Furnierlagen an einer Mittellinie des Sperrholzes verlegt ist.

12. Bodenbelag (18) nach Anspruch 10, wobei die Faserrichtung des bzw. der Furniere in der oberen Furnierlage, der unteren Furnierlage und einer Furnierlage an einer Mittellinie des Sperrholzes rechtwinklig zur ersten Hauptfestigkeitsrichtung des Sperrholzes verläuft und wobei die Gruppe von zwei benachbarten Furnierlagen mit der gleichen Faserrichtung relativ zueinander an einer Seite der Furnierlage an der Mittellinie des Sperrholzes gleich daneben angeordnet ist.

## Revendications

1. Revêtement de sol (18) pour un espace de chargement d'un véhicule de transport de fret ou d'une unité de transport de fret d'un véhicule de transport de fret, lequel revêtement de sol (18) est fixé à un châssis (14) du véhicule de transport de fret ou à un châssis (14) de l'unité de transport de fret d'un véhicule de transport de fret, dans lequel le revêtement de sol (18) comprend au moins un panneau de contreplaqué (10, 19, 20, 21, 19', 20', 21') formé par un contreplaqué comprenant une pluralité de couches de placage empilées les unes sur les autres et collées ensemble avec une couche de placage adhésive qui est formée d'un ou plusieurs placages dans la même position verticale dans la direction de l'épaisseur du contreplaqué,
la pluralité des couches de placage dans le contreplaqué étant de 12 à 44, le contreplaqué ayant une couche de placage supérieure et une couche de placage inférieure et une première direction de résistance principale et une deuxième direction de résistance principale, la résistance du contreplaqué étant plus grande dans la première direction de résistance principale que dans la deuxième direction de résistance principale, et dans lequel contreplaqué 25 à 38,4 % des couches de placage sont déposées de telle sorte qu'une direction du grain du ou des placages dans les couches de placage est perpendiculaire à la première direction de résistance principale du contreplaqué et la direction du grain du ou des placages dans au moins une couche de placage parmi les trois couches de placage supérieures ou parmi trois couches de placage inférieures est transversale à la direction du grain du ou des placages dans au moins une autre couche de placage parmi les trois couches de placage supérieures ou inférieures
**caractérisé en ce que**
chaque couche de placage du contreplaqué comprend un ou plusieurs placages (3), dans lequel un placage (3) est une feuille de matériau en bois, un rondin découpé de manière rotative,
chaque placage (3) individuel a la même résistance ou rigidité que les autres placages,
une surface supérieure du contreplaqué est revêtue d'une résine de phénol ou de polyphénol,
la direction du grain du ou des placages dans la couche de placage supérieure et la couche de placage inférieure est perpendiculaire à la première direction de résistance principale du contreplaqué, et
la direction du grain du ou des placages dans un groupe de couches de placage comprenant deux à cinq couches de placage adjacentes à au moins l'une parmi la couche de placage supérieure ayant la direction du grain perpendiculaire à la première direction de résistance principale du contreplaqué et la couche de placage inférieure ayant la direction du grain perpendiculaire à la première direction de résistance principale du contreplaqué est transversale à la direction du grain de la couche de placage supérieure et de la couche de placage inférieure ayant la direction du grain perpendiculaire à la première direction de résistance principale du contreplaqué.

2. Revêtement de sol (18) selon la revendication 1, dans lequel
une surface inférieure du contreplaqué est revêtue d'une résine de phénol ou d'un polyphénol.

3. Revêtement de sol (18) selon la revendication 1 ou 2, dans lequel le contreplaqué est revêtu d'un film de résine de phénol.

4. Revêtement de sol (18) selon l'une quelconque des revendications précédentes, dans lequel le contreplaqué a été fabriqué à partir de placages (3) réalisés à partir d'un arbre à feuilles caduques, tel qu'un bouleau ou un hêtre.

5. Revêtement de sol (18) selon l'une quelconque des revendications précédentes, dans lequel la direction du grain du ou des placages dans une couche de placage parmi deux couches de placage supérieures est transversale à la direction du grain du ou des placages dans une autre couche de placage parmi deux couches de placage supérieures.

6. Revêtement de sol (18) selon la revendication 5, dans lequel la direction du grain du ou des placages dans une couche de placage parmi deux couches de placage supérieures et la direction du grain du ou des placages dans une couche de placage parmi deux couches de placage inférieures sont transversales à la direction du grain du ou des placages dans une autre couche de placage parmi deux couches de placage supérieures et deux couches de placage inférieures.

7. Revêtement de sol (18) selon l'une quelconque des revendications précédentes, dans lequel le nombre de couches de placage dans le contreplaqué est au moins l'un parmi 15 à 35, 17 à 30 et 19 à 25.

8. Revêtement de sol (18) selon l'une quelconque des revendications précédentes, dans lequel la direction du grain du ou des placages dans un groupe de couches de placage comprenant trois à quatre couches de placage adjacentes à au moins l'une parmi la couche de placage supérieure ayant la direction du grain perpendiculaire à la première direction de résistance principale du contreplaqué et la couche de placage inférieure ayant la direction du grain perpendiculaire à la première direction de résistance principale du contreplaqué est transversale à la direction du grain de la couche de placage supérieure et de la couche de placage inférieure ayant la direction du grain perpendiculaire à la première direction de résistance principale du contreplaqué.

9. Revêtement de sol (18) selon l'une quelconque des revendications précédentes, dans lequel les placages formant huit, de préférence dix, couches de placage intermédiaires du contreplaqué sont déposés de telle sorte que les directions du grain du ou des placages dans des couches de placage adjacentes sont transversales l'une par rapport à l'autre.

10. Revêtement de sol (18) selon l'une quelconque des revendications 1 à 8, dans lequel les placages formant huit, de préférence dix, couches de placage intermédiaires du contreplaqué sont déposés de telle sorte que les directions du grain du ou des placages dans des couches de placage adjacentes sont transversales l'une par rapport à l'autre sauf pour un groupe de couches de placage comprenant deux couches de placage adjacentes, dans lequel les directions du grain dans ces couches de placage sont les mêmes l'une par rapport à l'autre et par rapport à la première direction de résistance principale du contreplaqué.

11. Revêtement de sol (18) selon la revendication 10, dans lequel le groupe de deux couches de placage adjacentes est déposé au niveau d'un axe central du contreplaqué.

12. Revêtement de sol (18) selon la revendication 10, dans lequel la direction du grain du resp. des placages dans la couche de placage supérieure, la couche de placage inférieure et une couche de placage au niveau d'un axe central du contreplaqué est perpendiculaire à la première direction de résistance principale du contreplaqué et dans lequel le groupe de deux couches de placage adjacentes ayant la même direction du grain l'une par rapport à l'autre est agencé au niveau d'un côté de la couche de placage au niveau de l'axe central du contreplaqué à côté d'elle.
